(19) Europäisches Patentamt
European Patent Office
Office européen des brevets

(11) **EP 4 433 788 B1**

(12) **FASCICULE DE BREVET EUROPEEN**

(45) Date de publication et mention
de la délivrance du brevet:
**05.11.2025 Bulletin 2025/45**

(21) Numéro de dépôt: **22793196.1**

(22) Date de dépôt: **30.09.2022**

(51) Classification Internationale des Brevets (IPC):
**G01K 17/20** *(2006.01)*     **G01K 19/00** *(2006.01)*

(52) Classification Coopérative des Brevets (CPC):
**G01K 19/00; G01K 17/20**

(86) Numéro de dépôt international:
**PCT/FR2022/051850**

(87) Numéro de publication internationale:
**WO 2023/089255 (25.05.2023 Gazette 2023/21)**

(54) **FLUXMETRE THERMIQUE RESISTIF A DERIVE COMPENSEE ET UN PROCEDE DE FABRICATION D'UN TEL FLUXMETRE**

RESISTIVER THERMISCHER FLUSSMESSER MIT KOMPENSIERTER DRIFT UND VERFAHREN ZUR HERSTELLUNG EINES SOLCHEN DURCHFLUSSMESSERS

RESISTIVE THERMAL FLUX METER WITH COMPENSATED DRIFT AND PROCESS FOR MANUFACTURING SUCH A FLUX METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2021 FR 2112117**

(43) Date de publication de la demande:
**25.09.2024 Bulletin 2024/39**

(73) Titulaire: **ArianeGroup SAS**
**78130 Les Mureaux (FR)**

(72) Inventeur: **FERAILLE, Thierry**
**33185 LE HAILLAN (FR)**

(74) Mandataire: **Cabinet Beau de Loménie**
**103, rue de Grenelle**
**75340 Paris Cedex 07 (FR)**

(56) Documents cités:
**EP-A1- 0 870 574     CN-A- 106 225 959**
**CN-A- 109 668 674**

## Description

### Domaine Technique

L'invention concerne un capteur de flux thermique résistif, ou fluxmètre thermique, et plus particulièrement une compensation de la dérive de mesure d'un fluxmètre thermique résistif.

### Technique antérieure

Avec notamment la pression et la température, le flux thermique est un des paramètres majeurs à prendre en compte dans la conception d'un moteur et pour l'amélioration de l'aérodynamisme d'un véhicule.

La mesure d'un flux thermique est particulièrement importante dans la détermination directe des besoins en refroidissement de zones chaudes de pâles ou d'aubes.

En outre, si la température sur la surface et la température des gaz sont connues, la mesure d'un flux thermique permet de fournir une valeur du coefficient de transfert thermique qui peut être comparé avec la valeur théorique fournie.

Un capteur de flux thermique ou fluxmètre est un transducteur produisant un signal proportionnel au flux thermique local. Ce flux de chaleur peut avoir des origines différentes ; en principe les flux thermiques par convection, radiation et conduction peuvent être mesurés. Les fluxmètres sont constitués de petits thermocouples connectés en série. Certains instruments sont en fait des capteurs spécifiques du flux thermique comme les pyranomètres (pour la mesure de rayonnement solaire). On trouve aussi les jauges de Boelter Schmidt (pour la mesure de flux de chaleur du feu). Il existe aussi les fluxmètres à jauge Gardon, les jauges « plug », les réseaux de thermocouples sur couche mince, et les ponts de Wheatstone sur couche mince.

L'utilisation de fluxmètres à couche mince, à thermocouples ou à pont de Wheatstone, offre plusieurs avantages par rapport aux autres capteurs.

Les fluxmètres à couche mince n'ont pas besoin d'une conformation particulière du composant sur lequel ils sont montés. En outre, avec une épaisseur généralement inférieure à 10 microns, ils sont plus minces que les autres fluxmètres.

Les fluxmètres à couche mince sont ainsi moins encombrants et gênant pour l'environnement de fonctionnement, et ont un impact minimal sur les caractéristiques physiques et thermiques de la structure de support.

En général, le fonctionnement d'un fluxmètre dépend des lois de Fourier sur la conduction thermique. On mesure la différence de température $\Delta T$ au travers d'une épaisseur donnée $\Delta x$ d'un matériau dont la conductivité thermique k est aussi connue pour déterminer le flux thermique Q ensuite.

$$[\text{Math 1}] \quad Q = \frac{\Delta T}{\Delta x}$$

Dans un fluxmètre à pont de Wheatstone à couche mince, la différence de température au travers de l'épaisseur $\Delta x$ est mesurée grâce à la variation de résistance dans un ou plusieurs bras du pont de Wheatstone.

Dans une configuration de fluxmètre à pont de Wheatstone dite à double face, deux bras du pont se situent sur une première surface du substrat tandis que les deux autres bras sont situés sur la face opposée. Dans une configuration de fluxmètre à pont de Wheatstone dite mono face, les quatre bras sont réalisés sur la même face du substrat, deux des bras ayant une épaisseur d'isolant différente des deux autres.

Si on considère un fluxmètre présentant une épaisseur I et une conductivité thermique $k_1$, pour mesurer le flux thermique dans un substrat d'épaisseur L et de conductivité thermique $k_2$, le signal mesuré vérifiera l'équation suivante :

$$[\text{Math 2}] \quad V_{sig} = \frac{V\beta Q\frac{1}{k_1}}{2+\beta Q\left(\frac{1}{k_1}+2\frac{L}{k_2}\right)}$$

Avec V la tension de polarisation du pont, $\beta$ le coefficient de température de résistance du matériau du pont, et Q le flux thermique.

Typiquement, dans une configuration double face, on aurait une épaisseur de fluxmètre I d'une valeur de 1,016 mm, une épaisseur de substrat L à mesurer d'environ 2,54 cm, une conductivité thermique $k_1$ du fluxmètre de 36 W/m/K pour l'alumine, et une conductivité thermique $k_2$ du substrat à mesurer de 15 W/m/K pour l'inox, et un coefficient de température de résistance du matériau du pont de l'ordre de $3,98 \times 10^{-3}$ K$^{-1}$. Avec un tension de polarisation V de l'ordre de 1 V et un flux thermique de l'ordre de 1 W/cm$^2$, on obtiendrait un signal $V_{sig}$ de l'ordre de 528 ($\mu$V/V)/(W/cm$^2$).

Un fluxmètre à couche mince à pont de Wheatstone fonctionne de la façon suivante. Sans flux thermique appliqué au fluxmètre, tous les éléments du pont, c'est-à-dire les quatre bras résistifs, sont à une température initiale $T_0$, et

présentent une résistance initiale $R_0$. Lorsqu'un flux thermique est appliqué au fluxmètre, les deux bras résistifs du pont qui ne sont pas recouverts par une couche d'isolant sont à une température de surface $T_S$ et les deux bras résistifs du pont recouverts par une couche d'isolant sont à une température de fond $T_F$. La résistance des bras est alors respectivement égale à $R_0[1+\beta(T_S-T_0)]$ pour les bras non isolés, et $R_0[1+\beta(T_F-T_0)]$ pour les bras isolés, avec $\beta$ le coefficient de température linéaire des résistances. Avec une tension de polarisation $V$, le signal de sortie d'un bras isolé vérifie l'équation suivante :

$$[\text{Math 3}] \quad V_1 = V \frac{R_0[1+\beta(T_F-T_0)]}{R_0[1+\beta(T_S-T_0)]+R_0[1+\beta(T_F-T_0)]}$$

Et le signal de sortie d'un bras non isolé vérifie l'équation suivante :

$$[\text{Math 4}] \quad V_2 = V \frac{R_0[1+\beta(T_S-T_0)]}{R_0[1+\beta(T_S-T_0)]+R_0[1+\beta(T_F-T_0)]}$$

Le signal de sortie du fluxmètre vérifie alors l'équation suivante :

$$[\text{Math 3}] \quad V_{sig} = V_2 - V_1 = V \frac{\beta(T_S-T_F)}{2+\beta[(T_F-T_0)+(T_S-T_0)]}$$

Les principaux fluxmètres connus sont basés sur un pont de Wheatstone déposé par un procédé de dépôt de couche mince sur deux étages séparés par une couche de silice déposée par un procédé de dépôt de couche mince. L'ensemble des couches est déposé sur un substrat isolant. Un tel fluxmètre basé sur un pont de Wheatstone est connu de CN 106 225 959 A.

Il a malheureusement été observé que l'échauffement du fluxmètre conduisait à une dérive de la mesure. Cette dérive altère la mesure lorsque le capteur est soumis au flux thermique. De plus, en l'absence de flux, la mesure ne revient pas à zéro, compromettant ainsi les mesures ultérieures.

Cette dérive provient de l'élévation globale de la température en surface du capteur. En effet, le pont déposé n'est pas parfait, c'est-à-dire que les résistances de chacun des quatre bras, ou des quatre branches, du pont de Wheatstone ne sont pas identiques ; autrement dit, les valeurs des résistances à une température donnée sont différentes et leur évolution en température est différente. Ainsi, chaque résistance évolue différemment avec la température ce qui crée un déséquilibre parasite du pont de Wheatstone qui constitue une partie de la dérive observée et qui est responsable du non-retour à zéro de la mesure en l'absence de flux.

## Exposé de l'invention

La présente invention a donc pour but principal de proposer une solution pour compenser la dérive du fluxmètre, c'est-à-dire pour compenser l'imperfection du pont de Wheatstone.

Dans un premier objet de l'invention, il est proposé un procédé de fabrication d'un fluxmètre thermique résistif à dérive compensée, le fluxmètre comprenant un substrat sur lequel est déposé par un procédé de dépôt par couche mince un pont de Wheatstone comportant deux premières branches résistives formées dans une première couche et deux secondes branches résistives formées dans une seconde couche, la première et la seconde couches étant séparées par une couche de silice déposée par un procédé de dépôt par couche mince, le procédé de fabrication comprenant :

- au moins deux séries de mesures à au moins deux températures différentes, chaque série de mesure comportant au moins une mesure de la résistance de chaque première et seconde branche résistive du pont de Wheatstone, une mesure d'une tension d'alimentation du fluxmètre, une mesure de la tension de sortie du fluxmètre, et une mesure de la température du fluxmètre,
- pour chaque première et seconde branche résistive du pont de Wheatstone, une détermination, à partir des mesures effectuées, d'un jeu de résistances de compensation, une résistance équivalente d'une branche résistive correspondant à la résistance issue d'un couplage en parallèle d'une branche résistive du pont de Wheatstone avec la résistance de compensation associée,
- un couplage des résistances de compensation à toutes ou partie des branches résistives du pont de Wheatstone.

Dans un premier aspect du procédé de compensation, le pont de Wheatstone peut être réalisé par un procédé de dépôt par couche mince à base de platine, et les températures auxquelles sont réalisées les mesures des résistances peuvent être comprises dans une plage de températures trois fois plus petite que la plage de températures d'utilisation du pont de Wheatstone.

Lorsqu'on a un coefficient de variation de température relativement constant des résistances du pont de Wheatstone, il n'est pas nécessaire de faire la caractérisation des résistances sur l'ensemble de la plage de température d'utilisation du pont de Wheatstone. On peut ainsi réduire la plage de température des mesures à une plage plus restreinte.

Dans un deuxième aspect du procédé de compensation, la détermination d'une valeur de résistance de compensation pour chaque première et seconde branche résistive peut comprendre une sélection d'une valeur de résistance parmi un jeu de résistances donné.

Le jeu de résistances donné comprend de préférence des résistances du commerce.

Dans un second objet de l'invention, il est proposé un fluxmètre thermique résistif comprenant un substrat sur lequel est déposé un pont de Wheatstone déposé par un procédé de dépôt par couche mince, le pont de Wheatstone comportant deux premières branches résistives formées dans une première couche et deux secondes branches résistives formées dans une seconde couche, la première et la seconde couches étant séparées par une couche de silice déposée par un procédé de dépôt par couche mince.

Selon une caractéristique générale du fluxmètre thermique résistif selon l'invention, le fluxmètre comprend en outre quatre résistances de compensation, chaque résistance de compensation étant couplée en parallèle d'une branche résistive spécifique du pont de Wheatstone, une résistance équivalente de chaque branche résistive ayant un coefficient de variation de température équivalent à celui des autres branches résistives à un écart type près, la résistance équivalente d'une branche résistive correspondant à la résistance issue d'un couplage en parallèle d'une branche résistive du pont de Wheatstone avec la résistance de compensation associée.

L'ajout des résistances de compensation permet ainsi de réduire fortement voire d'annuler le non-retour à zéro et la dérive observée pendant la mesure.

Selon un premier aspect du fluxmètre thermique résistif, chaque résistance de compensation possède de préférence une valeur fixe.

Selon un deuxième aspect du fluxmètre thermique résistif, ledit substrat peut être en alumine.

Selon un troisième aspect du fluxmètre thermique résistif, les premières et secondes branches résistives du pont de Wheatstone peuvent être en platine.

Selon un quatrième aspect du fluxmètre thermique résistif, les résistances de compensation peuvent être montées sur un circuit déporté par rapport au substrat sur lequel sont déposées les branches résistives du pont de Wheatstone

**Brève description des dessins**

D'autres caractéristiques et avantages de la présente invention ressortiront de la description faite ci-dessous, en référence aux dessins annexés qui en illustrent un exemple de réalisation dépourvu de tout caractère limitatif.

[Fig. 1] La figure 1 représente schématiquement une vue de dessus d'un fluxmètre thermique résistif à dérive compensée selon l'un mode de réalisation de l'invention.

[Fig. 2] La figure 2 représente schématiquement une vue de en coupe du fluxmètre thermique résistif à dérive compensée de la figure 1.

[Fig. 3] La figure 3 est une représentation graphique de l'évolution temporelle de la tension de sortie du fluxmètre thermique résistif de la figure 1 comparé celle d'un flux thermique résistif selon l'état de la technique.

[Fig. 4] La figure 4 présente schématiquement un logigramme d'un procédé de fabrication d'un fluxmètre thermique résistif de la figure 1 selon un mode de mise en œuvre de l'invention.

**Description des modes de réalisation**

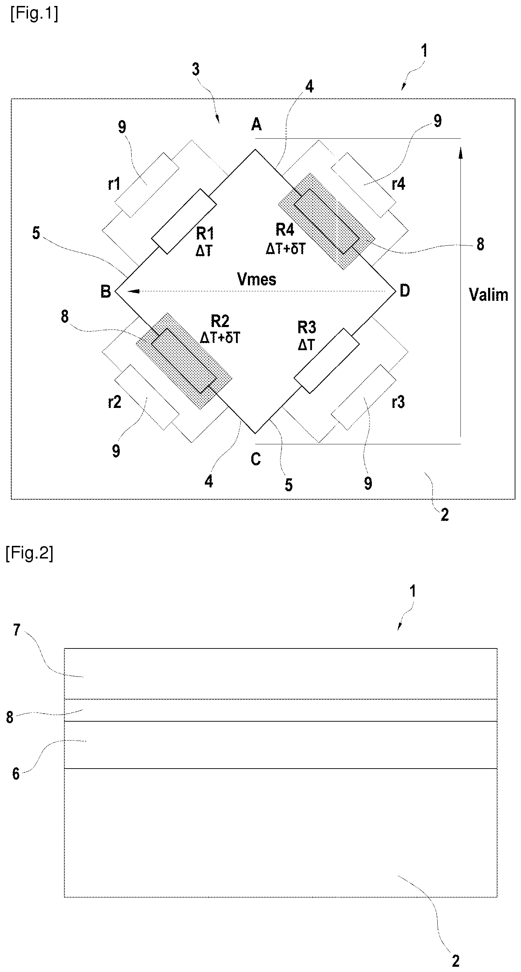

Sur la figure 1 est représentée schématiquement une vue de dessus d'un fluxmètre 1 thermique résistif à dérive compensée selon un mode de réalisation de l'invention, et sur la figure 2 est représentée schématiquement une vue en coupe ddu fluxmètre de la figure 1.

Comme cela est illustré sur les figures 1 et 2, le fluxmètre 1 comprend un substrat 2 sur lequel est déposé un pont de Wheatstone 3 par un procédé de dépôt par couche mince et comprenant quatre bras résistifs 4 et 5. Le pont de Wheatstone 2 comporte deux premiers bras résistifs 4 formés dans une première couche 6 et deux seconds bras résistifs 5 formées dans une seconde couche 7. La première couche 6 et la seconde couche 7 sont séparées par une couche de silice 8 déposée par un procédé de dépôt par couche mince. On a ainsi un empilement de couches comportant successivement le substrat 2, la première couche 6, la couche de silice 8, et la seconde couche 7, la couche de silice 8 isolant ainsi la première couche 6 de la seconde couche 7.

Chaque premier bras résistif 4 est couplé entre les deux seconds bras résistifs 5, et chaque second bras résistif 5 est couplé entre les deux premiers bras résistifs 4, formant ainsi quatre nœuds successifs A, B, C et D. Chaque bras résistifs forme une résistance R1 à R4. La première résistance R1 étant située sur un second bras résistif 5 entre les nœuds A et B, la deuxième résistance R2 étant située sur un premier bras résistif 4 entre les nœuds B et C, la troisième résistance R3 étant située sur un autre second bras résistif 5 entre les nœuds C et D, la quatrième résistance R2 étant située sur un autre premier bras résistif 4 entre les nœuds A et D.

Le fluxmètre 1 comprend en outre quatre résistances de compensation 9. Chaque résistance de compensation 9 est couplée en parallèle d'un bras résistif distinct 4 ou 5 du pont de Wheatstone 3. Une première résistance de compensation 9 de valeur r1 est couplée en parallèle du bras résistif ayant la première résistance R1, une deuxième résistance de compensation 9 de valeur r2 est couplée en parallèle du bras résistif ayant la deuxième résistance R2, une troisième résistance de compensation 9 de valeur r3 est couplée en parallèle du bras résistif ayant la troisième résistance R3, une quatrième résistance de compensation 9 de valeur r4 est couplée en parallèle du bras résistif ayant la quatrième résistance R4.

Ainsi, entre chaque couple de nœuds entre lesquels se situe un bras résistif, on obtient une même résistance équivalente, c'est-à-dire une résistance équivalente égale à celle des autres à un écart type près, la résistance équivalente entre deux nœuds correspondant à la résistance équivalente du couplage en parallèle de la résistance du bras résistif avec la résistance de compensation associée.

Le pont de Wheatstone 3 est alimenté en application une tension $V_{alim}$ entre les nœuds A et C, et on mesure la tension de sortie $V_{mes}$ du pont de Wheatstone 3 entre les nœuds B et D.

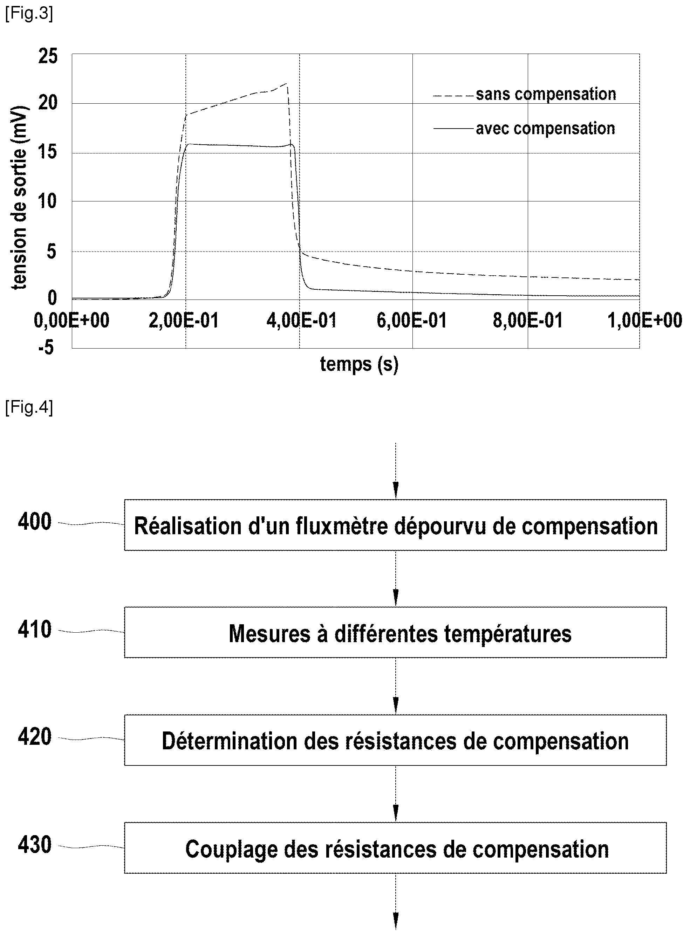

Sur la figure 3 est représentée graphiquement l'évolution temporelle en secondes de la tension de sortie $V_{mes}$ en millivolts du fluxmètre thermique résistif de la figure 1 en trait plein comparé celle d'un flux thermique résistif selon l'état de la technique en trait pointillé.

On voit sur cette figure 3, d'une part, que sans la compensation la tension de sortie ne redescend jamais complètement à 0 contrairement à la mesure avec le fluxmètre de la figure 1, et, d'autre part, que tension mesurée par le fluxmètre de l'état de la technique n'est jamais stable et croit constamment contrairement à la mesure avec le fluxmètre de la figure 1 est stabilisée sur une même tension.

Sur la figure 4 est représenté un logigramme d'un procédé de fabrication du fluxmètre thermique résistif à dérive compensée 1 de la figure 1.

Dans une première étape du procédé 400, on réalise le fluxmètre de la figure 1 sans les résistances de compensation 9.

Dans une deuxième étape du procédé 410, on réalise au moins deux séries de mesures à au moins deux températures distinctes. Par exemple, on place le fluxmètre dépourvu de résistance de compensation dans un environnement à une première température comprise entre 0°C et 150°C, par exemple 20°C. Une fois que le fluxmètre dépourvu de résistances de compensation est stabilisé à la première température, on réalise une première série de mesure. Puis, on place le fluxmètre dépourvu de résistance de compensation dans un environnement à une deuxième température comprise entre 0°C et 150°C, par exemple 10°C. Une fois que le fluxmètre dépourvu de résistances de compensation est stabilisé à la première température, on réalise une deuxième série de mesure. On peut réaliser d'autre séries de mesures si besoin.

Chaque série de mesures comprend une mesure la résistance R1 à R4 de chaque premier et second bras résistif 4 et 5 du pont de Wheatstone 3, une mesure de la tension d'alimentation $V_{alim}$, une mesure de la tension de sortie $V_{mes}$, et une mesure de la température.

Dans une troisième étape 420, pour chaque premier et second bras résistif 4 et 5 du pont de Wheatstone 3, on détermine, à partir des mesures effectuées, des résistances de compensation 9, r1 à r4, pour que la résistance équivalente de chaque bras résistif 4 et 5 ait un coefficient de variation de température égal à ou proche de celui des autres bras résistifs à un écart type près.

La résistance équivalente d'un bras résistif correspond à la résistance pour un couplage en parallèle d'un bras résistif 4 ou 5 du pont de Wheatstone 3 avec la résistance de compensation 9 associée.

Les résistances de compensation 9 sont déterminées à partir des valeurs d'impédances mesurés pour chacune des branches résistives et du déséquilibre du pont sous une alimentation 10V continu, pour différentes températures d'essai. Les mesures réalisées aux différentes températures permettent de caractériser en température les résistances de chacune des branches avant compensation. Ensuite, pour chaque branche résistive et pour chaque valeur de résistances «dite de compensation » sélectionnées préalablement, l'évolution en température du déséquilibre du pont (sur une plage de température prédéterminée en fonction du besoin et de l'application) est calculée pour une condition identique ou différente d'alimentation (alimentation en tension avec une valeur différente de 10V ou alimentation en courant continu). Ceci permet alors de calculer l'écart quadratique de l'offset par rapport à sa moyenne sur la plage de température considérée. Le choix est ensuite porté sur le jeu de résistances de compensation 9 qui minimise cet écart quadratique. C'est ce jeu de résistances qui sera monté *in fine* sur le produit. Après compensation, le déséquilibre du pont est en conséquence modifié par rapport à l'état avant compensation.

Dans cette troisième étape, la valeur des résistances de compensation est choisie à partir d'un jeu de résistances commerciales pour que la réalisation du fluxmètre 1 soit simplifiée et que son coût de fabrication soit réduit.

Dans une quatrième étape 430, on couple les résistances de compensation 9 à chacun des bras résistif 4 et 5 du pont de Wheatstone 3.

Le fluxmètre ainsi proposé par l'invention permet ainsi de compenser la dérive due à la chaleur et ainsi d'améliorer la précision du fluxmètre et la consistance de ses mesures.

## Revendications

1.  Procédé de fabrication d'un fluxmètre thermique résistif à dérive thermique compensée, le fluxmètre comprenant un substrat sur lequel est déposé par un procédé de dépôt par couche mince un pont de Wheatstone comportant deux premières branches résistives formées dans une première couche et deux secondes branches résistives formées dans une seconde couche, la première et la seconde couches étant séparées par une couche de silice déposée par un procédé de dépôt par couche mince, le procédé de fabrication comprenant :

    - au moins deux séries de mesures (410) à au moins deux températures différentes, chaque série de mesure comportant au moins une mesure de la résistance de chaque première et seconde branche résistive du pont de Wheatstone, une mesure d'une tension d'alimentation du fluxmètre, une mesure de la tension de sortie du fluxmètre, et une mesure de la température du fluxmètre,
    - pour chaque première et seconde branche résistive du pont de Wheatstone, une détermination (420), à partir des mesures effectuées, d'un jeu de résistances de compensation, une résistance équivalente de chaque branche résistive ayant un coefficient de variation de température équivalent à celui des autres branches résistives à un écart type près, la résistance équivalente d'une branche résistive correspondant à la résistance issue d'un couplage en parallèle d'une branche résistive du pont de Wheatstone avec la résistance de compensation associée,
    - un couplage (430) des résistances de compensation à toutes ou partie des résistances du pont de Wheatstone.

2.  Procédé selon la revendication 1, dans lequel le pont de Wheatstone est réalisé par un procédé de dépôt par couche mince à base de platine, et les températures auxquelles sont réalisées les mesures des résistances sont comprises dans une plage trois fois plus petite que la plage de températures d'utilisation du pont de Wheatstone.

3.  Procédé selon l'une des revendications 1 ou 2, dans lequel la détermination d'une valeur de résistance de compensation pour chaque première et seconde branche résistive comprend une sélection d'une valeur de résistance parmi un jeu de résistances donné.

4.  Procédé selon la revendication 3, dans lequel le jeu de résistances comprend seulement des résistances du commerce.

5.  Fluxmètre thermique résistif à dérive thermique compensée (1) comprenant un substrat (2) sur lequel est déposé un pont de Wheatstone (3) déposé par un procédé de dépôt par couche mince, le pont de Wheatstone (3) comportant deux premières branches résistives (4) formées dans une première couche (6) et deux secondes branches résistives (5) formées dans une seconde couche (7), la première et la seconde couches (6, 7) étant séparées par une couche de silice (8) déposée par un procédé de dépôt par couche mince, le fluxmètre comprenant en outre quatre résistances de compensation (9), chaque résistance de compensation (9) étant couplée en parallèle d'une branche résistive (4, 5) spécifique du pont de Wheatstone (3), une résistance équivalente de chaque branche résistive ayant un coefficient de variation de température équivalent à celui des autres branches résistives (4, 5) à un écart type près, la résistance équivalente d'une branche résistive (4, 5) correspondant à la résistance issue d'un couplage en parallèle d'une branche résistive (4, 5) du pont de Wheatstone (3) avec la résistance de compensation (9) associée.

6.  Fluxmètre (1) selon la revendication 5, dans lequel chaque résistance de compensation possède une valeur fixe.

7.  Fluxmètre (1) selon l'une des revendications 5 ou 6, dans lequel ledit substrat (2) est en alumine.

8.  Fluxmètre (1) selon l'une des revendications 5 à 7, dans lequel les premières et secondes branches résistives (4, 5) du pont de Wheatstone (3) sont en platine.

9. Fluxmètre (1) selon l'une des revendications 5 à 8, dans lequel les résistances de compensation (9) sont montées sur un circuit déporté par rapport au substrat (2) sur lequel sont déposées les branches résistives (4, 5) du pont de Wheatstone (3).

**Patentansprüche**

1. Verfahren zur Herstellung eines resistiven thermischen Flussmessers mit kompensierter thermischer Drift, der Flussmesser umfassend ein Substrat, auf dem eine Wheatstone-Brücke mit zwei ersten Widerstandszweigen, die in einer ersten Schicht gebildet sind, und zwei zweiten Widerstandszweigen, die in einer zweiten Schicht gebildet sind, durch ein Dünnschicht-Abscheidungsverfahren abgeschieden wird, wobei die erste und die zweite Schicht durch eine Siliziumdioxidschicht getrennt sind, die durch ein Dünnschicht-Abscheidungsverfahren abgeschieden wird, das Herstellungsverfahren umfassend:

   - mindestens zwei Messreihen (410) bei mindestens zwei verschiedenen Temperaturen, jede Messreihe umfassend mindestens eine Messung des Widerstands von jedem ersten und zweiten Widerstandszweig der Wheatstone-Brücke, eine Messung einer Versorgungsspannung des Flussmessers, eine Messung der Ausgangsspannung des Flussmessers und eine Messung der Temperatur des Flussmessers,
   - für jeden ersten und zweiten Widerstandszweig der Wheatstone-Brücke ein Bestimmen (420), anhand der durchgeführten Messungen, eines Satzes von Ausgleichswiderständen, einen äquivalenten Widerstand von jedem Widerstandszweig, der einen Temperaturschwankungskoeffizienten aufweist, der dem der anderen Widerstandszweige bis auf eine Standardabweichung entspricht, wobei der äquivalente Widerstand eines Widerstandszweigs dem Widerstand entspricht, der aus einer Parallelschaltung eines Widerstandszweigs der Wheatstone-Brücke mit dem assoziierten Ausgleichswiderstand hervorgeht,
   - eine Kopplung (430) von Ausgleichswiderständen an alle oder einen Teil der Widerstände der Wheatstone-Brücke.

2. Verfahren nach Anspruch 1, wobei die Wheatstone-Brücke durch ein Dünnschicht-Abscheidungsverfahren auf Platinbasis hergestellt wird und die Temperaturen, bei denen die Widerstandsmessungen durchgeführt werden, in einem Bereich liegen, der dreimal kleiner ist als der Verw2endungstemperaturbereich der Wheatstone-Brücke.

3. Verfahren nach einem der Ansprüche 1 oder 2, wobei die Bestimmung eines Ausgleichswiderstandswerts für jeden ersten und zweiten Widerstandszweig eine Auswahl eines Widerstandswerts aus einem gegebenen Satz von Widerständen umfasst.

4. Verfahren nach Anspruch 3, wobei der Satz von Widerständen nur handelsübliche Widerstände umfasst.

5. Thermisch kompensierter resistiver Flussmesser (1) mit kompensierter thermischer Drift, umfassend ein Substrat (2), auf dem eine Wheatstone-Brücke (3) abgeschieden ist, die durch ein Dünnschicht-Abscheidungsverfahren abgeschieden wird, die Wheatstone-Brücke (3) umfassend zwei erste Widerstandszweige (4), die in einer ersten Schicht (6) gebildet sind, und zwei zweite Widerstandszweige (5), die in einer zweiten Schicht (7) gebildet sind, aufweist, wobei die erste und die zweite Schicht (6, 7) durch eine Schicht aus Siliziumdioxid (8) getrennt sind, die durch ein Dünnschichtverfahren abgeschieden wird, der Flussmesser ferner umfassend vier Ausgleichswiderstände (9), wobei jeder Ausgleichswiderstand (9) parallel zu einem spezifischen Widerstandszweig (4, 5) der Wheatstone-Brücke (3) gekoppelt ist, ein äquivalenter Widerstand von jedem Widerstandszweig einen Temperaturschwankungskoeffizienten aufweist, der dem der anderen Widerstandszweige (4, 5) innerhalb einer Standardabweichung entspricht, der äquivalente Widerstand eines Widerstandszweigs (4, 5) dem Widerstand entspricht, der aus einer Parallelschaltung eines Widerstandszweigs (4, 5) der Wheatstone-Brücke (3) mit dem assoziierten Ausgleichswiderstand (9) entsteht.

6. Flussmesser (1) nach Anspruch 5, wobei jeder Ausgleichswiderstand einen festen Wert besitzt.

7. Flussmesser (1) nach einem der Ansprüche 5 oder 6, wobei das Substrat (2) aus Aluminiumoxid ist.

8. Flussmesser (1) nach einem der Ansprüche 5 bis 7, wobei der erste und der zweite Widerstandszweig (4, 5) der Wheatstone-Brücke (3) aus Platin sind.

9. Flussmesser (1) nach einem der Ansprüche 5 bis 8, wobei die Ausgleichswiderstände (9) auf einer von dem Substrat (2) versetzten Schaltung montiert sind, auf der die Widerstandszweige (4, 5) der Wheatstone-Brücke (3) aufgebracht sind.

## Claims

1. A method of manufacturing a resistive heat flow meter with compensated thermal drift, the flow meter comprising a substrate on which is deposited, by a thin layer deposition method, a Wheatstone bridge comprising two first resistive branches formed in a first layer and two second resistive branches formed in a second layer, the first and second layers being separated by a layer of silica deposited by a thin layer deposition method, the manufacturing method comprising:

   - at least two series of measurements (410) at least at two different temperatures, each series of measurements comprising at least one measurement of the resistance of each first and second resistive branch of the Wheatstone bridge, a measurement of a supply voltage of the flow meter, a measurement of the output voltage of the flow meter, and a measurement of the temperature of the flow meter,
   - for each first and second resistive branch of the Wheatstone bridge, determining (420), from the measurements done, a set of compensation resistors, an equivalent resistance of each resistive branch having a coefficient of temperature variation equivalent to that of the other resistive branches to within one standard deviation, the equivalent resistance of a resistive branch corresponding to the resistance resulting from a parallel coupling of a resistive branch of the Wheatstone bridge with the associated compensation resistor,
   - coupling (430) the compensation resistors to all or part of the resistors of the Wheatstone bridge.

2. The method according to claim 1, wherein the Wheatstone bridge is made by a platinum-based thin layer deposition method, and the temperatures at which the resistance measurements are done are within a range three times smaller than the operating temperature range of the Wheatstone bridge.

3. The method according to one of claims 1 or 2, wherein the determination of a compensation resistance value for each first and second resistive branch comprises selecting a resistance value from among a given set of resistors.

4. The method according to claim 3, wherein the set of resistors comprises only commercial resistors.

5. A resistive heat flowmeter with compensated thermal drift (1) comprising a substrate (2) on which is deposited a Wheatstone bridge (3) deposited by a thin layer deposition method, the Wheatstone bridge (3) comprising two first resistive branches (4) formed in a first layer (6) and two second resistive branches (5) formed in a second layer (7), the first and second layers (6, 7) being separated by a layer of silica (8) deposited by a thin layer deposition method, the flow meter further comprising four compensation resistors (9), each compensation resistor (9) being coupled in parallel with a resistive branch (4, 5) specific to the Wheatstone bridge (3), an equivalent resistance of each resistive branch having a temperature variation coefficient equivalent to that of the other resistive branches (4, 5) to within one standard deviation, the equivalent resistance of a resistive branch (4, 5) corresponding to the resistance resulting from a parallel coupling of a resistive branch (4, 5) of the Wheatstone bridge (3) with the associated compensation resistor (9).

6. The flow meter (1) according to claim 5, wherein each compensation resistor has a fixed value.

7. The flow meter (1) according to one of claims 5 or 6, wherein said substrate (2) is made of alumina.

8. The flow meter (1) according to one of claims 5 to 7, wherein the first and second resistive branches (4, 5) of the Wheatstone bridge (3) are made of platinum.

9. The flow meter (1) according to one of claims 5 to 8, wherein the compensation resistors (9) are mounted on a remote circuit with respect to the substrate (2) on which the resistive branches (4, 5) of the Wheatstone bridge (3) are deposited.

[Fig.1]

[Fig.2]

[Fig.3]

[Fig.4]

| | |
|---|---|
| 400 | Réalisation d'un fluxmètre dépourvu de compensation |
| 410 | Mesures à différentes températures |
| 420 | Détermination des résistances de compensation |
| 430 | Couplage des résistances de compensation |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 106225959 A